# EUROPEAN PATENT APPLICATION

(11) **EP 4 201 748 A1**
(43) Date of publication of application: **28.06.2023**
(21) Application number: 21858414.2
(22) Date of filing: 20.08.2021
(51) Int. Cl.: B60R 11/02, F21Y 115/10, F21Y 115/15, F21V 3/10, F21S 43/20, F21S 43/50, F21S 45/50, F21W 103/00

(54) **MOBILE-BODY-MOUNTED DISPLAY DEVICE**

(30) Priority: 21.08.2020 JP 2020139769
(71) Applicant: Faltec Co., Ltd., Kawasaki-shi, Kanagawa 212-0013 (JP)
(72) Inventor: YAMAGUCHI Kazuki, Kawasaki-shi, Kanagawa 212-0013 (JP); SATO Ayumi, Kawasaki-shi, Kanagawa 212-0013 (JP)
(74) Representative: Troesch Scheidegger Werner AG
(86) International application number: PCT/JP2021/030663
(87) International publication number: WO 2022/039271

(57) **Abstract**

According to the present invention, there is provided a mobile-object-mounted display device (1, 1A) that is mounted on a mobile object (20) and performs display toward the outside of the mobile object (20), including a display unit (3) that performs display by light emission and a semi-transmissive layer (6) that is semi-transmissive and is disposed in front of the display unit (3).

## Description

### [Technical Field]

The present invention relates to a mobile-object-mounted display device. Priority is claimed on Japanese Patent Application No. 2020-139769, filed August 21, 2020, the content of which is incorporated herein by reference.

### [Background Art]

In recent years, it has been proposed to install a display device that displays information to pedestrians and other drivers outside a vehicle on the vehicle or the like, assuming the spread or the like of autonomous vehicles in the future. For example, Patent Document 1 proposes a driving support system provided with an own vehicle external display device.

### [Citation List]

### [Patent Document]

[Patent Document 1]
Japanese Patent No. 6680136

### [Summary of Invention]

### [Technical Problem]

However, when the display device is not performing display, light is not emitted from the display device, and unlit light emitting elements and the like are likely to be visually recognized by a person outside the vehicle. An outer surface of the vehicle generally has a complicated three-dimensional shape in order to improve an external impression of the vehicle. When the unlit light emitting elements and the like are visually recognized in a wide range on a part of the outer surface of the vehicle, they greatly affect the external impression of the vehicle.

The present invention has been made in view of the above-described problems, and an object of the present invention is to reduce the influence on the external impression of the mobile object when display is not performed in a mobile-object-mounted display device which is mounted on the mobile object and performs display toward the outside of the mobile object.

### [Solution to Problem]

The present invention adopts the following aspects as means for solving the above problems.

A first aspect is a mobile-object-mounted display device that is mounted on a mobile object and performs display toward an outside of the mobile object, the device comprising: a display unit that performs display by light emission; and a semi-transmissive layer that is semi-transmissive and is disposed in front of the display unit.

A second aspect is the mobile-object-mounted display device according to the first aspect, further including a transparent outer cover that is disposed in front of the display unit and covers the display unit from the front, in which the semi-transmissive layer is disposed in front of the outer cover or between the outer cover and the display unit.

A third aspect is the mobile-object-mounted display device according to the second aspect, in which the semi-transmissive layer is provided on a rear surface of the outer cover.

A fourth aspect is the mobile-object-mounted display device according to the second or third aspect, further including a rear member that is coupled to the outer cover from behind and forms a closed space that accommodates the semi-transmissive layer with the outer cover therebetween.

A fifth aspect is the mobile-object-mounted display device according to any one of first to fourth aspects, in which the semi-transmissive layer is composed of a paint layer formed of paint.

A sixth aspect is the mobile-object-mounted display device according to any one of first to fourth aspects, in which the semi-transmissive layer has an ink layer formed of ink, and a film layer that covers the ink layer from behind.

A seventh aspect is the mobile-object-mounted display device according to any one of first to fourth aspects, in which the semi-transmissive layer is composed of a semi-transparent plastic sheet.

An eighth aspect is the mobile-object-mounted display device according to any one of first to fourth aspects, in which the semi-transmissive layer is composed of a semi-transparent metal layer.

A ninth aspect is the mobile-object-mounted display device according to any one of first to eighth aspects, in which a buffer space is provided between the display unit and the semi-transmissive layer.

A tenth aspect is the mobile-object-mounted display device according to ninth aspect, further including an interposing member that is interposed between the display unit and the semi-transmissive layer, in which the interposing member is disposed to avoid at least a part of a display area of the display unit when viewed from a front of the semi-transmissive layer.

An eleventh aspect is the mobile-object-mounted display device according to the tenth aspect, in which the display area has a rectangular shape having an upper edge portion, a lower edge portion, a left edge portion, and a right edge portion when viewed from an outer cover side, and the interposing member has a bilaterally symmetrical shape that overlaps at least any one of the upper edge portion, the lower edge portion, the left edge portion, and the right edge portion of the display area when viewed from the outer cover side.

A twelfth aspect is the mobile-object-mounted display device according to the eleventh aspect, in which the interposing member has a frame shape surrounding the display area when viewed from the front of the semi-transmissive layer.

### [Advantageous Effects of Invention]

According to the present invention, the semi-transmissive layer is disposed in front of the display unit. Therefore, a part of external light incident on the semi-transmissive layer is reflected by the semi-transmissive layer. Therefore, even when the display is not being performed, it is possible to cause a person outside the mobile-object-mounted display device to visually recognize a color of the semi-transmissive layer. Accordingly, it is possible to prevent the display unit from being visually recognized from an outside when the display is not performed. Therefore, according to the present invention, it is possible to reduce the influence on the external impression of the mobile object when display is not performed in a mobile-object-mounted display device which is mounted on the mobile object and performs display toward the outside of the mobile object.

### [Brief Description of Drawings]

FIG. 1 is a schematic front view of a vehicle provided with a screen grille according to a first embodiment of the present invention.
FIG. 2 is an exploded perspective view of the screen grille according to the first embodiment of the present invention.
FIG. 3 is a cross-sectional view of the screen grille according to the first embodiment of the present invention along a vertical plane in a vehicle front-rear direction.
FIG. 4 is a cross-sectional view of a screen grille according to a second embodiment of the present invention along a vertical plane in a vehicle front-rear direction.

### [Description of Embodiments]

An embodiment of a mobile-object-mounted display device according to the present invention will be described below with reference to the drawings.

### (First Embodiment)

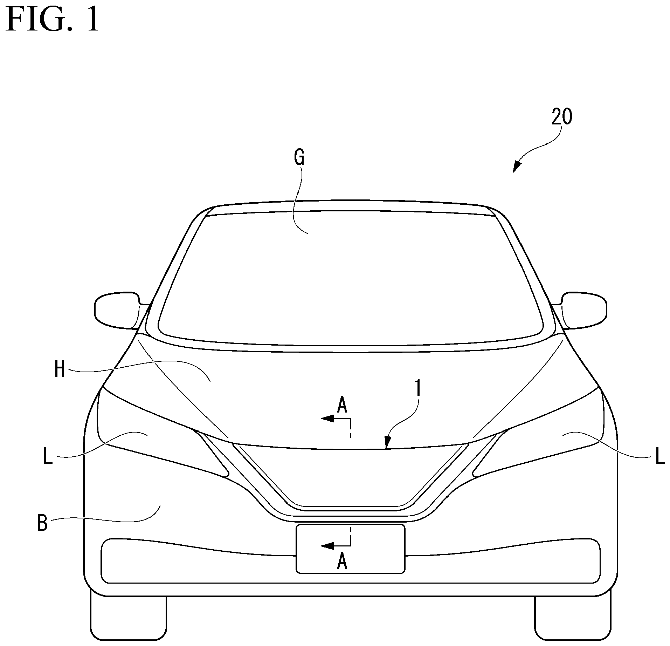

FIG. 1 is a schematic front view of a vehicle 20 (mobile object) provided with a screen grille 1 (mobile-object-mounted display device) according to the first embodiment of the present invention. As shown in FIG. 1, the vehicle 20 includes an openable and closable hood H disposed below a windshield G, headlamps L that are disposed below the hood H to be separated from each other to the left and right, and a front bumper B disposed below the headlamps L.

The surfaces of vehicle parts such as the hood H, the headlamps L, and the front bumper B have complicated three-dimensional shapes corresponding to the type of the vehicle 20 on which they are mounted. For example, in the present embodiment, an upper surface of the hood H is curved to drop downward as it goes toward the front of the vehicle. The front surfaces of the headlamps L and the front surface of the front bumper B are curved rearward as they go toward ends of the vehicle 20 in a vehicle width direction.

Note that the vehicle parts mounted on the vehicle 20 in the present embodiment are only examples, and other vehicle parts can be mounted on the vehicle 20. Further, the surface shapes of the vehicle parts according to the present embodiment are also examples, and the surface shapes of the vehicle parts can be changed to a three-dimensional shape instead of a flat surface. However, not all vehicle parts need to have a three-dimensional surface shape. At least one surface shape of the plurality of vehicle parts has a three-dimensional shape.

The screen grille 1 of the present embodiment is a display device that performs display of pictograms, characters, or the like toward the outside of the vehicle 20 (outside the mobile object), and as shown in FIG. 1, it is disposed in a front part of the vehicle 20 to be surrounded by the vehicle parts having three-dimensional surfaces as described above. In the present embodiment, the screen grille 1 is disposed below the hood H, above the front bumper B, and between the left and right headlamps L.

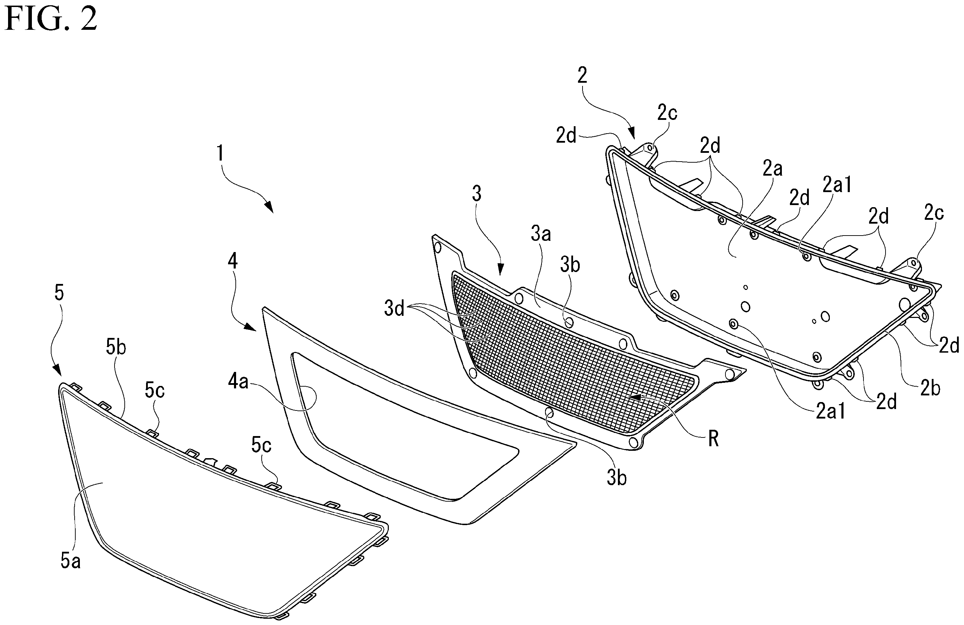

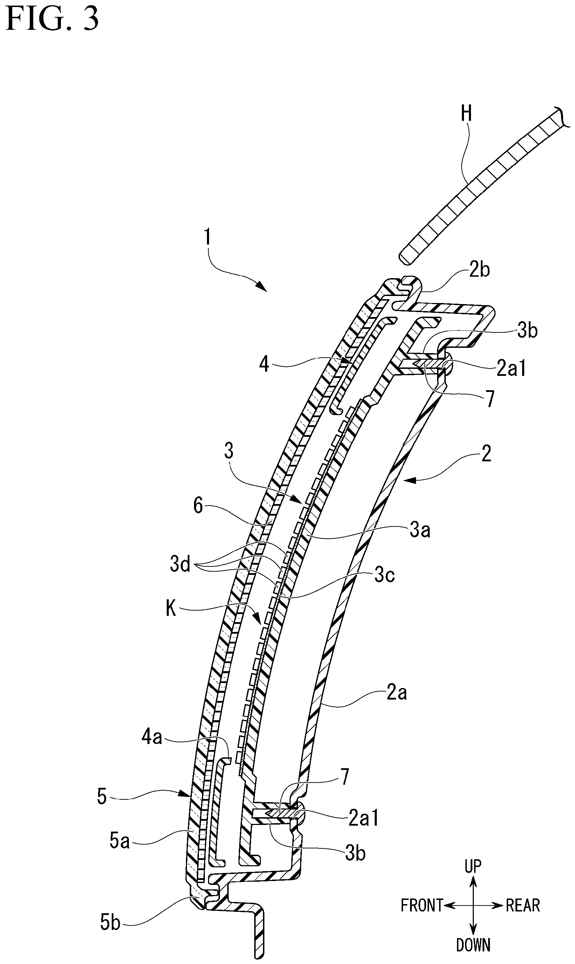

FIG. 2 is an exploded perspective view of the screen grille 1 of the present embodiment. FIG. 3 is a cross-sectional view of the screen grille 1 of the present embodiment along a vertical plane in a vehicle front-rear direction, and is a cross-sectional view along line A-A in FIG. 1. For example, as shown in FIGS. 2 and 3, the screen grille 1 of the present embodiment includes an inner member 2 (rear member), a display unit 3, a bezel 4, an outer cover 5, and a semi-transmissive layer 6.

Note that, in the following description, a side where information is presented by the display unit 3 is called a front side, and a side where the information is not displayed by the display unit 3 is called a rear side. In the present embodiment, the inner member 2, the display unit 3, the bezel 4, and the outer cover 5 are arranged in a front-rear direction. Among these, the inner member 2 is disposed on a rearmost side, and the outer cover 5 is disposed on a frontmost side.

The inner member 2 is a member that directly or indirectly supports the display unit 3, the bezel 4, and the outer cover 5, and is disposed behind (to the rear of) the display unit 3, the bezel 4, and the outer cover 5. The inner member 2 is formed of a black ABS, for example. The inner member 2 has a plate-like portion 2a and an inner edge portion 2b provided to surround the plate-like portion 2a in the up-down direction and the left-right direction.

The plate-like portion 2a is a plate-like portion that is disposed with a certain gap in the front-rear direction with respect to a support substrate 3a of the display unit 3, which will be described later, and covers the display unit 3 from behind. The plate-like portion 2a of the inner member 2 is disposed with a certain gap with respect to the support substrate 3a of the display unit 3, which will be described later.

Further, the plate-like portion 2a is provided with a plurality of holes 2a1 for fixing the display unit 3 with screws 7 (see FIG. 3). The display unit 3 is fixed to the inner member 2 by screwing the screws 7 inserted into the holes 2a1 into threaded portions 3b provided on the support substrate 3a of the display unit 3, which will be described later. Further, the inner edge portion 2b of the inner member 2 is provided with a plurality of attachment portions 2c for attaching the inner member 2 to the vehicle body. The screen grille 1 of the present embodiment is fixed to the vehicle body by fixing these attachment portions 2c to the vehicle body with a screw (that is not shown) or the like.

The inner edge portion 2b of the inner member 2 is provided with locking projections 2d for locking the outer cover 5. The outer cover 5 is coupled to the inner member 2 by the locking projections 2d. Such an inner member 2 is coupled to the outer cover 5 from behind and forms a closed space that accommodates the semi-transmissive layer 6 and the LED elements 3d with the outer cover 5 therebetween.

The display unit 3 is a device that displays characters and pictograms under the control of a control device (that is not shown), and includes the support substrate 3a, the threaded portions 3b, a pasting sheet 3c, and the LED elements 3d (light emitting elements). "LED" means "light emitting diode."

The support substrate 3a is a plate-like portion to which the pasting sheet 3c is pasted on the front surface, and supports the LED elements 3d via the pasting sheet 3c. Such a support substrate 3a is disposed with a certain gap with respect to the outer cover 5. The threaded portions 3b are cylindrical portions provided to protrude rearward from a back surface of the support substrate 3a and a plurality of threaded portions 3b are provided to correspond to the plurality of holes 2a1 provided in the plate-like portion 2a of the inner member 2. That is, the number of threaded portions 3b and the number of holes 2a1 are the same. The screws 7 are screwed into these threaded portions 3b, as shown in FIG. 3.

The pasting sheet 3c is a sheet material having the LED elements 3d fixed on the surface side and an adhesive surface on the back surface side. The pasting sheet 3c is pasted on the front surface of the support substrate 3a, and fixes the LED elements 3d with respect to the support substrate 3a.

The LED elements 3d are fixed to the front surface of the support substrate 3a via the pasting sheet 3c, and the plurality of LED elements 3d are arranged in the front-rear direction and the left-right direction. These LED elements 3d are collectively disposed in a display area R (see FIG. 2) provided in the central portion of the support substrate 3a when viewed from the front. Each of the LED elements 3d is coupled to a lead wire (that is not shown) for supplying power to the LED elements 3d. These lead wires are extended laterally from the display area R, drawn out via openings provided in the support substrate 3a and the plate-like portion 2a of the inner member 2, for example, and coupled to the control device. Note that it is preferable to seal the openings for passing the lead wires. Desired characters or pictograms are displayed in the display area R by selectively causing these LED elements 3d to emit light. Note that, instead of the configuration of fixing the LED elements 3d to the support substrate 3a via the pasting sheet 3c, a circuit board may be provided and the LED elements 3d may be mounted on the circuit board.

In addition, as shown in FIG. 2, an area in which the LED elements 3d are not disposed is provided annularly around the display area R in the support substrate 3a, and the threaded portions 3b are provided on the back surface of the area where the LED elements 3d are not provided.

Further, a buffer space K is provided between the LED elements 3d and the semi-transmissive layer 5. The buffer space K is a space that prevents the LED elements 3d from coming into contact with the semi-transmissive layer 6 even when the LED elements 3d and the outer cover 5 move relative to each other due to running vibrations of the vehicle 20. Further, by providing the buffer space K, it is possible to make it more difficult to visually recognize the LED elements 3d from the front of the outer cover 5 when the LED elements 3d are turned off.

As shown in FIG. 2, the bezel 4 is an annular plate member having an opening 4a in the center, and has a frame shape surrounding the display area R when viewed from the outer cover 5 side. The bezel 4 is an interposing member interposed between the display unit 3 and the outer cover 5, and is formed of a black ABS, for example. The opening 4a of the bezel 4 has a shape slightly smaller than the display area R when viewed from the front side of the outer cover 5, such that the emitting LED elements 3d can be visually recognized from the outer side of the outer cover 5.

The bezel 4 is disposed slightly ahead of the LED elements 3d, and is disposed with a slight gap from the LED elements 3d. As shown in FIG. 3, the bezel 4 is disposed such that an inner edge portion slightly overlaps the LED element 3d arranged at the end of the display area R when viewed from the front. Since the inner edge portion forming the opening 4a of the bezel 4 slightly overlaps the LED element 3d at the end when viewed from the front, even when a gap is provided between the bezel 4 and the LED element 3d, it is possible to prevent the outer side of the display area R from being visually recognized from the outside. That is, it is possible to prevent the outer edge portion of the display area R from being visually recognized via the opening 4a of the bezel 4 when the opening 4a of the bezel 4 is viewed from the front side of the outer cover 5.

Further, such a bezel 4 functions as a stopper that restricts the display unit 3 from approaching the semi-transmissive layer 6 due to running of the vehicle 20 or the like. Therefore, even when the vehicle 20 is stopped in an emergency, the bezel 4 can be prevented from approaching the semi-transmissive layer 6 of the display unit 3, the LED element 3d can be prevented from coming into contact with the semi-transmissive layer 6, and the distance between the LED elements 3d and the semi-transmissive layer 6 can be prevented from changing.

The outer cover 5 is a transparent cover member disposed in front of the display unit 3 (that is, the LED elements 3d). The outer cover 5 is formed of, for example, PMMA or the like. Such an outer cover 5 has a transparent plate-like portion 5a and an outer edge portion 5b provided to surround the transparent plate-like portion 5a in the up-down direction and the left-right direction.

The transparent plate-like portion 5a is a plate-like portion that is disposed in front of the LED elements 3d and covers the display unit 3 from the front. The transparent plate-like portion 5a of such an outer cover 5 is disposed with a certain gap with respect to the LED elements 3d (that is, display area R) of the display unit 3. The outer edge portion 5b of the outer cover 5 is provided with locking claws 5c for locking the outer cover 5 to the inner member 2. The outer cover 5 is coupled to the inner member 2 by locking the locking claws 5c with the locking projections 2d of the inner member 2. Note that a boundary portion between the outer edge portion 5b and the inner edge portion 2b is sealed as necessary. Such sealing seals the closed space between the inner member 2 and the outer cover 5, making it possible to protect the LED elements 3d from moisture or the like in the air.

The semi-transmissive layer 6 is a layer that transmits some incident light and reflects the rest, and is provided on the rear surface of the outer cover 5. That is, the semi-transmissive layer 6 is disposed between the outer cover 5 and the display unit 3 and is disposed in front of the display unit 3 to cover the display unit 3 from the front. In the present embodiment, the semi-transmissive layer 6 is composed of a paint layer formed by applying paint to the rear surface of the outer cover 5 and drying the paint. Note that it is preferable that a color component reflected by the semi-transmissive layer 6 be the same color as or a similar color to those of the surrounding vehicle parts. As a result, a person viewing from the outside can visually recognize the semi-transmissive layer 6 integrally with the surrounding vehicle parts, such that the influence of the screen grille 1 on the external impression of the vehicle 20 can be further reduced.

In the screen grille 1 of the present embodiment, characters or pictograms are displayed in the display area R by selectively causing the LED elements 3d to emit light. At this time, at least a part of light emitted in the display area R is transmitted through the semi-transmissive layer 6 and reaches the outside person. Also, a part of external light is reflected by the semi-transmissive layer 6. Therefore, when characters or pictograms are not displayed in the display area R, the component of light transmitted from the outside through the semi-transmissive layer 6, reflected on the display unit 3, transmitted again through the semi-transmissive layer 6, and emitted to the outside is extremely small compared to the component of external light reflected by the semi-transmissive layer 6. Therefore, when no characters or pictograms are displayed in the display area R, it is possible to prevent the outside person from visually recognizing the display unit 3.

The screen grille 1 of the present embodiment as described above is mounted on the vehicle 20 and performs display toward the outside of the vehicle 20. Further, the screen grille 1 of the present embodiment includes a display unit 3 that performs display by light emission, and a semi-transmissive layer 6 that is semi-transmissive and is disposed in front of the display unit 3.

According to the screen grille 1 of the present embodiment, the semi-transmissive layer 6 is disposed in front of the display unit 3. Therefore, a part of external light incident on the semi-transmissive layer 6 is reflected by the semi-transmissive layer 6. Therefore, even when the display is not performed, it is possible to cause a person outside the screen grille 1 to visually recognize a color of the semi-transmissive layer 6. Accordingly, it is possible to prevent the display unit 3 from being visually recognized from an outside when the display is not performed. Therefore, according to the screen grille 1 of the present embodiment, in the screen grille 1 that is mounted on the vehicle 20 and performs display toward the outside of the vehicle 20, the influence of the screen grille 1 on the external impression of the vehicle 20 when the display is not performed can be reduced.

Further, the screen grille 1 of the present embodiment includes a transparent outer cover 5 that is disposed in front of the display unit 3 and covers the display unit 3 from the front, and the semi-transmissive layer 6 is disposed between the outer cover 5 and the display unit 3. Therefore, according to the screen grille 1 of the present embodiment, the semi-transmissive layer 6 is disposed between the outer cover 5 and the display unit 3, and the semi-transmissive layer 6 can be protected by the outer cover 5 from wind and rain.

Further, in the screen grille 1 of the present embodiment, the semi-transmissive layer 6 is provided on the rear surface of the outer cover 5. Therefore, the semi-transmissive layer 6 can be supported without separately providing a member for supporting the semi-transmissive layer 6.

Further, the screen grille 1 of the present embodiment includes an inner member 2 that is coupled to the outer cover 5 from behind and forms a closed space that accommodates the semi-transmissive layer 6 with the outer cover 5 therebetween. Therefore, it is possible to prevent external moisture or the like from entering the space between the inner member 2 and the outer cover 5, thereby protecting the semi-transmissive layer 6 and the LED elements 3d from moisture or the like.

Further, in the screen grille 1 of the present embodiment, the semi-transmissive layer 6 is composed of a paint layer formed of paint. Therefore, the semi-transmissive layer 6 can be easily formed by drying the applied paint.

Moreover, in the screen grille 1 of the present embodiment, a buffer space K is provided between the display unit 3 and the semi-transmissive layer 6. Therefore, even when the LED elements 3d and the outer cover 5 move relative to each other due to running vibrations of the vehicle 20 or the like, the LED elements 3d can be prevented from coming into contact with the semi-transmissive layer 6. Further, by providing the buffer space K, it is possible to make it difficult to visually recognize the LED elements 3d from the front of the outer cover 5 when the LED elements 3d are turned off.

Further, the screen grille 1 of the present embodiment includes a bezel 4 interposed between the display unit 3 and the semi-transmissive layer 6, and the bezel 4 is disposed to avoid at least a part of the display area of the display unit 3 when viewed from the front of the semi-transmissive layer 6. Such a bezel 4 functions as a stopper that restricts the display unit 3 from approaching the outer cover 5 due to running of the vehicle 20 or the like. Therefore, even when the vehicle 20 is stopped in an emergency, the bezel 4 can prevent the display unit 3 from approaching the outer cover 5, the LED element 3d can be prevented from coming into contact with the semi-transmissive layer 6, and the distance between the LED elements 3d and the outer cover 5 can be prevented from changing.

Further, in the screen grille 1 of the present embodiment, the bezel 4 has a frame shape surrounding the display area when viewed from the front of the semi-transmissive layer 6. Therefore, the bezel 4 can hide the up-down direction and the left-right direction of the area where the LED elements 3d are disposed, and the lead wires and the like coupled to the LED elements 3d can be hidden. That is, the bezel 4 can hide the outer edge portions extending in the up-down direction and the left-right direction of the area where the LED elements 3d are disposed, and the lead wires and the like coupled to the LED elements 3d can be hidden. Therefore, the screen grille 1 of the present embodiment can improve the external impression of the screen grille 1 by including the bezel 4.

### (Second Embodiment)

Next, a second embodiment of the present invention will be described. Note that, in the description of the present embodiment, the description of the same parts as those of the first embodiment will be omitted or simplified.

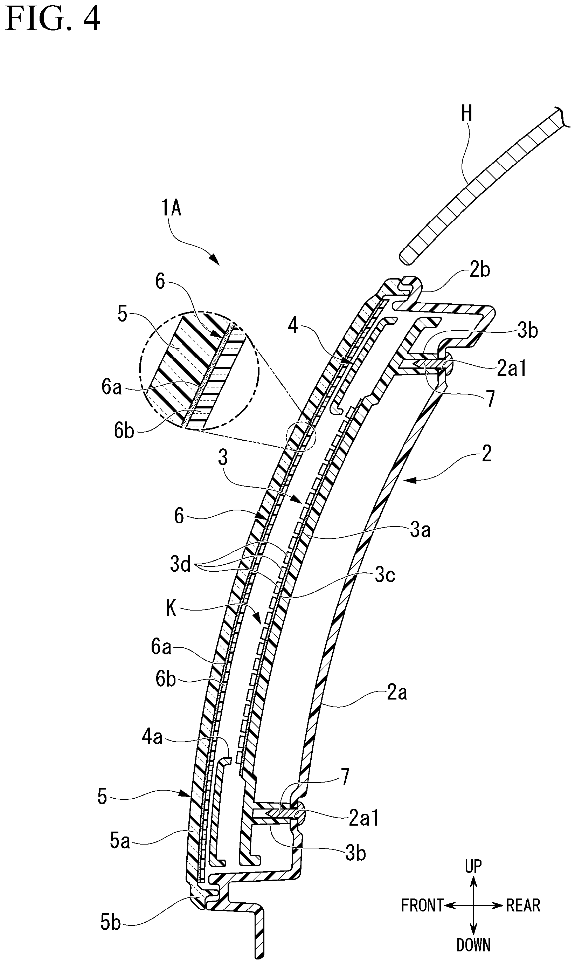

FIG. 4 is a cross-sectional view of a screen grille 1A of the present embodiment along a vertical plane in the front-rear direction of the vehicle. As shown in this figure, in the screen grille 1A of the present embodiment, the semi-transmissive layer 6 has an ink layer 6a formed of ink and a film layer 6b covering the ink layer 6a from behind.

The ink layer 6a is a layer that transmits a part of the incident light and reflects the rest, and is formed by printing ink on the film layer 6b by printing or the like and drying the ink. The film layer 6b is a transparent supporting member that supports the ink layer 6a. Note that the film layer 6b may also be a layer that transmits a part of the incident light and reflects the rest.

In the screen grille 1A of the present embodiment, the semi-transmissive layer 6 can be easily formed by printing ink on the film layer 6b and attaching the film layer 6b to the rear surface of the outer cover 5 together.

Although the preferred embodiments of the present invention have been described above with reference to the accompanying drawings, it goes without saying that the present invention is not limited to the above embodiments. The various shapes, combinations, and the like of each of the constituent members shown in the above-described embodiment are merely examples, and can be variously changed based on design requirements and the like without departing from the gist of the present invention.

For example, in the above-described embodiment, the configuration including the LED elements 3d as the light emitting elements has been described. However, the present invention is not limited to this. For example, an organic EL (that is, electroluminescence) element or the like can be used as the light emitting element.

Further, in the above-described embodiment, the configuration in which the mobile-object-mounted display device of the present invention is mounted as the screen grille 1A on the front portion of the vehicle 20 has been described. However, the present invention is not limited to this. For example, it is possible to install the mobile-object-mounted display device on the side, rear, or upper portion of the vehicle 20.

Further, in the above-described embodiment, a configuration has been described in which the mobile object on which the mobile-object-mounted device of the present invention is mounted is the vehicle 20. However, the present invention is not limited to this. For example, it is possible to mount the mobile-object-mounted device of the present invention on an aerial mobile object such as a drone or an airship.

Moreover, in the above-described embodiment, the configuration including the outer cover 5 has been described. However, the present invention is not limited to this. For example, when the semi-transmissive layer 6 has weather resistance, it is possible to adopt a configuration without the outer cover 5. Also, when the semi-transmissive layer 6 has weather resistance, it is possible to dispose the semi-transmissive layer 6 in front of the outer cover 5.

Further, in the above embodiment, a configuration in which the semi-transmissive layer 6 is composed of a paint layer formed of paint, and a configuration in which the semi-transmissive layer 6 is composed of the ink layer 6a formed of ink and the film layer 6b covering the ink layer 6a from behind have been described. However, the semi-transmissive layer 6 may also be a semi-transparent plastic sheet. Such a plastic sheet can be molded by injection molding, extrusion, or the like. Also, the semi-transmissive layer 6 may be a semi-transparent metal layer. Such a metal layer can be produced by semi-transparent plating, vapor deposition, sputtering, or the like.

Further, in the above-described embodiment, the configuration in which the bezel 4 is an annular plate member has been described. However, the present invention is not limited to this. When viewed from the front of the vehicle, the bezel 4 may be bilaterally symmetrical to overlap at least one of the upper edge portion, lower edge portion, left edge portion, and right edge portion of the display area R. For example, the shape of the bezel 4 may be a shape that overlaps only the upper edge portion, a shape that overlaps only the lower edge portion, a shape that overlaps only the left and right sides, and a shape that overlaps either the upper edge portion or the lower edge portion and both the left and right sides. In such a case, the bezel 4 functions as a stopper that restricts the display unit 3 from approaching the outer cover 5. Moreover, the bezel 4 can prevent the outer side of the display area R from being visually recognized from the outside. Note that although the bezel 4 functions as the stopper when the bezel 4 overlaps with at least one of the upper edge portion, the lower edge portion, the left edge portion, and the right edge portion of the display area R, it is preferable that the bezel 4 be bilaterally symmetrical when viewed from the front of the vehicle in terms of aesthetics of the vehicle.

### [Industrial Applicability]

According to the present invention, the semi-transmissive layer is disposed in front of the display unit. Therefore, a part of external light incident on the semi-transmissive layer is reflected by the semi-transmissive layer. Therefore, even when the display is not performed, it is possible to cause a person outside the mobile-object-mounted display device to visually recognize a color of the semi-transmissive layer. Accordingly, it is possible to prevent the display unit from being visually recognized from the outside when the display is not performed. Therefore, according to the present invention, it is possible to reduce the influence on the external impression of the mobile object when display is not performed in a mobile-object-mounted display device which is mounted on the mobile object and performs display toward the outside of the mobile object.

### [Reference Signs List]

1: Screen grille (Mobile-object-mounted display device)
1A: Screen grille (Mobile-object-mounted display device)
2: Inner member (Rear member)
3: Display unit
4: Bezel (Interposing member)
5: Outer cover
6: Semi-transmissive layer
6a: Ink layer
6b: Film layer
20: Vehicle (Mobile object)
K: Buffer space
R: Display area

## Claims

1. A mobile-object-mounted display device that is mounted on a mobile object and performs display toward the outside of the mobile object, the device comprising:
a display unit that performs display by light emission; and
a semi-transmissive layer that is semi-transmissive and is disposed in front of the display unit.

2. The mobile-object-mounted display device according to Claim 1, further comprising:
a transparent outer cover that is disposed in front of the display unit and covers the display unit from the front,
wherein the semi-transmissive layer is disposed in front of the outer cover or between the outer cover and the display unit.

3. The mobile-object-mounted display device according to Claim 2,
wherein the semi-transmissive layer is provided on a rear surface of the outer cover.

4. The mobile-object-mounted display device according to Claim 2 or 3, further comprising:
a rear member that is coupled to the outer cover from behind and forms a closed space that accommodates the semi-transmissive layer with the outer cover therebetween.

5. The mobile-object-mounted display device according to any one of Claims 1 to 4,
wherein the semi-transmissive layer is composed of a paint layer formed of paint.

6. The mobile-object-mounted display device according to any one of Claims 1 to 4,
wherein the semi-transmissive layer has
an ink layer formed of ink, and
a film layer that covers the ink layer from behind.

7. The mobile-object-mounted display device according to any one of Claims 1 to 4,
wherein the semi-transmissive layer is composed of a semi-transparent plastic sheet.

8. The mobile-object-mounted display device according to any one of Claims 1 to 4,
wherein the semi-transmissive layer is composed of a semi-transparent metal layer.

9. The mobile-object-mounted display device according to any one of Claims 1 to 8,
wherein a buffer space is provided between the display unit and the semi-transmissive layer.

10. The mobile-object-mounted display device according to Claim 9, further comprising:
an interposing member that is interposed between the display unit and the semi-transmissive layer,
wherein the interposing member is disposed to avoid at least a part of a display area of the display unit when viewed from a front of the semi-transmissive layer.

11. The mobile-object-mounted display device according to Claim 10,
wherein the display area has a rectangular shape having an upper edge portion, a lower edge portion, a left edge portion, and a right edge portion when viewed from an outer cover side, and
the interposing member has a bilaterally symmetrical shape that overlaps at least any one of the upper edge portion, the lower edge portion, the left edge portion, and the right edge portion of the display area when viewed from the outer cover side.

12. The mobile-object-mounted display device according to Claim 11,
wherein the interposing member has a frame shape surrounding the display area when viewed from the front of the semi-transmissive layer.
